# EUROPÄISCHE PATENTSCHRIFT

(11) **EP 3 621 930 B1**
(45) Veröffentlichungstag und Bekanntmachung des Hinweises auf die Patenterteilung: **22.03.2023**
(21) Anmeldenummer: 18717069.1
(22) Anmeldetag: 16.04.2018
(51) Int. Cl.: C03C 17/23, C03C 17/34, C03C 17/36, G02B 1/116

(54) **SCHEIBE MIT ELEKTRISCH LEITFÄHIGER BESCHICHTUNG UND VERRINGERTER SICHTBARKEIT VON FINGERABDRÜCKEN**
DISC WITH ELECTRICALLY CONDUCTIVE COATING AND REDUCED VISIBILITY OF FINGERPRINTS
DISQUE COMPRENANT UN REVÊTEMENT ÉLECTROCONDUCTEUR ET PRÉSENTANT UNE VISIBILITÉ RÉDUITE DES EMPREINTES DIGITALES

(30) Priorität: 09.05.2017 EP 17170130
(43) Veröffentlichungstag der Anmeldung: 18.03.2020
(73) Patentinhaber: SAINT-GOBAIN GLASS FRANCE, 92400 Courbevoie (FR)
(72) Erfinder: HAGEN, Jan, 53123 Bonn (DE); LINGNER, Julian, 52134 Herzogenrath (DE); RUFF, Julie, 52064 Aachen (DE); BESLER, Robert, 52134 Herzogenrath (DE); MANZ, Florian, 52064 Aachen (DE)
(74) Vertreter: Gebauer, Dieter Edmund
(86) Internationale Anmeldenummer: PCT/EP2018/059658
(87) Internationale Veröffentlichungsnummer: WO 2018/206236

(56) Entgegenhaltungen:
- WO-A1-2018/192727
- US-A1- 2013 129 945
- US-A1- 2015 239 774
- US-A1- 2016 214 887
- US-A1- 2016 229 741

## Beschreibung

Die Erfindung betrifft eine Scheibe mit elektrisch leitfähiger Beschichtung, sowie deren Herstellung und Verwendung.

Glasscheiben mit transparenten elektrisch leitfähigen Beschichtungen sind bekannt. Die Glasscheiben können dadurch mit einer Funktion versehen werden, ohne die Durchsicht durch die Scheibe wesentlich zu stören. Solche Beschichtungen kommen beispielsweise als heizbare Beschichtungen oder Wärmestrahlung reflektierende Beschichtungen auf Fensterscheiben für Fahrzeuge oder Gebäude zum Einsatz.

Der Innenraum eines Kraftfahrzeugs oder eines Gebäudes kann sich im Sommer bei hohen Umgebungstemperaturen und intensiver direkter Sonneneinstrahlung stark erwärmen. Ist die Außentemperatur dagegen geringer als die Temperatur im Innenraum, was insbesondere im Winter auftritt, so wirkt eine kalte Scheibe als Wärmesenke, die als unangenehm empfunden wird. Auch muss der Innenraum stark beheizt werden, um eine Auskühlung über die Fensterscheiben zu vermeiden.

Wärmestrahlung reflektierende Beschichtungen (sogenannte Low-E-Beschichtungen) reflektieren einen erheblichen Teil der Sonnenstrahlung insbesondere im Infrarotbereich, was im Sommer zu einer verringerten Erwärmung des Innenraums führt. Die Beschichtung verringert außerdem die Aussendung von langwelliger Wärmestrahlung einer erwärmten Scheibe in den Innenraum hinein. Sie verringert außerdem bei niedrigen Außentemperaturen im Winter die Abstrahlung der Wärme des Innenraums in die äußere Umgebung.

Um optimal zu wirken, muss die Wärmestrahlung reflektierende Beschichtung auf der exponierten innenraumseitigen Oberfläche der Scheibe angeordnet sein, also gleichsam zwischen dem Innenraum und der eigentlichen Glasscheibe. Dort ist die Beschichtung der Atmosphäre ausgesetzt, was die Verwendung von korrosionsanfälligen Beschichtungen, beispielsweise auf Basis von Silber, ausschließt. Als elektrisch leitfähige Beschichtungen auf exponierten Oberflächen haben sich aufgrund ihrer Korrosionsbeständigkeit und guten Leitfähigkeit Beschichtungen auf Basis von transparenten leitfähigen Oxiden (TCO, *transparent conductive oxide*), beispielsweise Indium-Zinn-Oxid (ITO, *indium tin oxide*)*.* Solche Beschichtungen sind beispielsweise aus EP 2 141 135 A1, WO 2010115558 A1 und WO 2011105991 A1 bekannt.

Beschichtungen auf exponierten Oberflächen haben den Nachteil, dass sie von Personen berührt werden können, welche Fingerabdrücke hinterlassen können. Die Fingerabdrücke sind auf den Beschichtungen häufig besonders gut zu erkennen, was die ästhetische Wirkung der Scheibe stark herabsetzt oder zu störenden lokalen Änderungen der Lichtreflexion führen können. Fingerabdrücke lassen sich mit üblichen Reinigungsmitteln teils nur schwer entfernen, wobei zusätzlich darauf geachtet werden muss, dass die Beschichtung nicht durch Chemikalien oder starke mechanische Belastung beim Putzen geschädigt wird.

Bekannte Ansätze zur Verringerung der Sichtbarkeit von Fingerabdrücken umfassen die Verwendung von aufgerauten Oberflächen oder von hydrophoben und oleophoben Schichten, wie beispielsweise in US2010304086A1 dargestellt, was jedoch die Herstellung der Scheiben erschwert oder deren Einsatzmöglichkeiten einschränken kann. US2003179455A1 offenbart eine zweischichtige Antireflex-Beschichtung für Kunststoffteile, welche die Sichtbarkeit von Fingerabdrücken vermindern soll. Die Schichtdicken werden so gewählt, dass sie der Hälfte beziehungsweise einem Viertel der mittleren Wellenlänge entsprechen, um geeignete Interferenzeffekte zu erreichen.

US20130129945A1 offenbart eine Scheibe mit einer Wärmestrahlung reflektierenden Beschichtung, beispielsweise aufgebaut ausgehend vom Substrat aus einer Siliziumnitrid-Schicht, einer Siliziumoxid-Schicht, einer ITO-Schicht, einer weiteren Siliziumnitrid-Schicht, einer weiteren Siliziumoxid-Schicht und einer abschließenden Titanoxid-Schicht. Die Beschichtung ist auf einer externen Glasoberfläche aufgebracht und weist infolge der abschließenden Titanoxid-Schicht selbstreinigende Eigenschaften auf. Die Sichtbarkeit von Fingerabdrücken spielt in US20130129945A1 keine Rolle.

US20150146286A1 offenbart eine Scheibe mit einer Wärmestrahlung reflektierenden Beschichtung, aufgebaut ausgehend vom Substrat aus einer Siliziumoxid-Schicht, einer ITO-Schicht, einer Siliziumnitrid-Schicht und einer weiteren Siliziumoxid-Schicht. Die Beschichtung ist auf der innenraumseitigen, externen Glasoberfläche aufgebracht. Die Sichtbarkeit von Fingerabdrücken spielt in US20150146286A1 keine Rolle.

US6416194B offenbart einen Spiegel, bestehend aus einem Substrat und einer reflektierenden Beschichtung. Das Reflexionsspektrum der Beschichtung weist ein lokales Maximum bei 428 nm auf. Ein dazu zu kürzeren Wellenlängen verschobenes lokales Minimum ist nicht offenbart, scheint anhand einer Extrapolation des Reflexionsspektrums aber zwischen 175 nm und 260 nm zu liegen.

Scheiben mit einer elektrisch leitfähigen Schicht können auch US 2016/214887 A1, US 2015/239774 A1 und US 2016/229741 A1 entnommen werden. Insbesondere zeigt US 2015/239774 A1 eine leitfähige Beschichtung mit einer Schichtenfolge ohne Blockerschicht.

Der vorliegenden Erfindung liegt die Aufgabe zugrunde, eine weiter verbesserte Scheibe mit einer elektrisch leitfähigen Beschichtung auf einer exponierten Oberfläche bereitzustellen, auf der Fingerabdrücke weniger deutlich sichtbar sind.

Die Aufgabe der vorliegenden Erfindung wird erfindungsgemäß durch eine Scheibe mit elektrisch leitfähiger Beschichtung gemäß Anspruch 1 gelöst. Bevorzugte Ausgestaltungen gehen aus den Unteransprüchen hervor.

Die erfindungsgemäße Scheibe umfasst ein Substrat und eine elektrisch leitfähige Beschichtung auf einer exponierten Oberfläche des Substrats. Die erfindungsgemäße Beschichtung umfasst mindestens eine elektrisch leitfähige Schicht. Unter einer exponierten Oberfläche wird im Sinne der Erfindung eine Oberfläche des Substrats verstanden, die zugänglich ist und direkten Kontakt zur umgebenden Atmosphäre hat, so dass die Beschichtung direkt von einer Person berührt werden kann oder beispielsweise durch Schmutz, Öle oder Fette kontaminiert werden kann. Die Beschichtung ist ausreichend korrosionsbeständig, um auf einer exponierten Oberfläche eingesetzt zu werden.

Fingerabdrücke bestehen aus einem Gemisch verschiedener biologischer Substanzen, insbesondere Fette und Säuren. Literaturwerten zufolge kann für Fingerabdrücke ein Brechungsindex von etwa 1,3 bis 1,6 angenommen werden. Die Erfinder haben durch Messungen mittels Weißlicht-Interferenz-Mikroskopie (WLIM) herausgefunden, dass typische Fingerabdrücke eine Dicke von wenigen Nanometern bis zu einigen Hundert Nanometern aufweisen. Der Erfindung liegt die Erkenntnis zugrunde, dass die Sichtbarkeit von Fingerabdrücken bis zu einer Dicke von einigen wenigen Hundert Nanometern mittels Interferenzoptik beeinflusst werden kann, welche wiederum durch die Ausgestaltung des die Beschichtung bildenden Schichtsystems einstellbar ist. Sehr dicke Fingerabdrücke können zwar weniger durch Interferenzoptik beeinflusst werden, jedoch wird die Gesamtoptik der Scheibe wesentlich verbessert, wenn zumindest die Fingerabdrücke mit einer Dicke von wenigen Hundert Nanometern, die den Großteil aller Fingerabdrücke ausmachen, weniger sichtbar sind. Die Erfinder haben überraschend erkannt, dass eine Scheibe mit einer elektrisch leitfähigen Beschichtung, die so eingestellt ist, dass sie ein lokales Minimum des Reflexionsgrads im Bereich von 310 nm bis 360 nm und ein lokales Maximum des Reflexionsgrads im Bereich von 400 nm bis 460 nm aufweist, zu einer verminderten Sichtbarkeit typischer Fingerabdrücke führt. Das lokale Minimum des Reflexionsgrads liegt bevorzugt im Bereich von 315 nm bis 355 nm, besonders bevorzugt von 320 nm bis 350 nm. Das lokale Maximum des Reflexionsgrads liegt bevorzugt im Bereich von 415 nm bis 450 nm. Die besagten lokalen Extremwerte sind dabei als Minimalanforderung zu verstehen und sollen nicht den Fall ausschließen, dass es sich dabei um globale Extremwerte handelt. Während im Falle des Maximums des Reflexionsgrads zumindest außerhalb des sichtbaren Bereichs Spektralbereiche existieren werden, die einen höheren Reflexionsgrad aufweisen, so ist es aber denkbar, dass das besagte lokale Minimum des Reflexionsgrades im mathematischen Sinne das globale Minimum ist.

Der Begriff "Reflexionsgrad" wird im Sinne der Norm DIN EN 410 verwendet. Unter dem Reflexionsgrad wird immer der schichtseitige Reflexionsgrad bezeichnet, der gemessen wird, wenn die beschichtete Oberfläche der Scheibe der Lichtquelle und dem Detektor zugewandt ist. Die angegebenen Werte für Brechungsindizes sind bei einer Wellenlänge von 550 nm gemessen.

Die erfindungsgemäße Beschichtung ist in einer bevorzugten Ausgestaltung eine Wärmestrahlung reflektierende Beschichtung. Eine solche Beschichtung wird häufig auch als Low-E-Beschichtung, Beschichtung niedriger Emissivität oder emissivitätsmindernde Beschichtung bezeichnet. Sie hat die Funktion, die Einstrahlung von Wärme in den Innenraum zu vermeiden (IR-Anteile der Sonnenstrahlung und insbesondere die thermische Strahlung der Scheibe selbst) und ebenso die Abstrahlung von Wärme aus dem Innenraum heraus. Die Beschichtung kann prinzipiell aber auch andere Funktionen erfüllen, beispielsweise als beheizbare Beschichtung, wenn sie elektrisch kontaktiert ist, so dass sie infolge eines elektrischen Stromflusses erwärmt wird.

Die erfindungsgemäße Scheibe ist bevorzugt eine Fensterscheibe und dafür vorgesehen, in einer Öffnung, beispielsweise eines Fahrzeugs oder eines Gebäudes, den Innenraum gegenüber der äußeren Umgebung abzutrennen. Die exponierte Oberfläche, auf der die erfindungsgemäße Beschichtung angeordnet ist, ist bevorzugt die innenraumseitige Oberfläche der Scheibe beziehungsweise des Substrats. Unter der innenraumseitigen Oberfläche wird im Sinne der Erfindung diejenige Oberfläche verstanden, die dafür vorgesehen ist, in Einbaulage der Scheibe dem Innenraum zugewandt zu sein. Das ist besonders vorteilhaft im Hinblick auf den thermischen Komfort im Innenraum. Die erfindungsgemäße Beschichtung kann dabei bei hohen Außentemperaturen und Sonneneinstrahlung besonders effektiv die von der gesamten Scheibe in Richtung des Innenraums abgestrahlte Wärmestrahlung zumindest teilweise reflektieren. Bei niedrigen Außentemperaturen kann die erfindungsgemäße Beschichtung effektiv die aus dem Innenraum abgestrahlte Wärmestrahlung reflektieren und somit die Wirkung der kalten Scheibe als Wärmesenke verringern. Üblicherweise werden die Oberflächen einer Verglasung von außen nach innen durchnummeriert, so dass die innenraumseitige Oberfläche bei Einfachverglasungen als "Seite 2" bezeichnet wird, bei Zweifachverglasungen (beispielsweise Verbundgläser oder Isolierverglasungen) als "Seite 4". Die Beschichtung kann alternativ aber auch auf der außenseitigen Oberfläche der Scheibe angeordnet sein. Die kann insbesondere im Architekturbereich sinnvoll sein, beispielsweise als Antikondensationsbeschichtung auf einer Fensterscheibe.

Die Beschichtung kann aber alternativ auch andere Funktionen erfüllen, beispielsweise als elektrisch basierter kapazitiver oder resistiver Sensor für taktile Anwendungen, wie *Touch Screens* oder *Touch Panels,* welche naturgemäß häufig mit Fingerabdrücken verunreinigt sind.

Die Beschichtung ist eine Abfolge dünner Schichten (Schichtaufbau, Schichtstapel). Während die elektrische Leitfähigkeit durch die mindestens eine elektrisch leitfähige Schicht sichergestellt wird, so werden die optischen Eigenschaften, insbesondere die Transmission und Reflexivität, maßgeblich durch die übrigen Schichten beeinflusst und können durch deren Ausgestaltung gezielt eingestellt werden. Einen besonderen Einfluss haben in diesem Zusammenhang sogenannte Entspiegelungsschichten oder Antireflexionsschichten, die einen geringeren Brechungsindex aufweisen als die elektrisch leitfähige Schicht und unterhalb wie oberhalb derselben angeordnet sind.

Diese Entspiegelungsschichten können insbesondere infolge von Interferenzeffekten die Transmission durch die Scheibe erhöhen und die Reflexivität verringern. Die Wirkung hängt entscheidend von Brechungsindex und Schichtdicke ab. Erfindungsgemäß umfasst die Beschichtung mindestens jeweils eine Entspiegelungsschicht unterhalb und oberhalb der elektrisch leitfähigen Schicht, wobei die Entspiegelungsschichten einen geringeren Brechungsindex aufweisen als die elektrisch leitfähige Schicht, bevorzugt einen Brechungsindex von höchstens 1,8, insbesondere von höchstens 1,6.

Die erfindungsgemäße Beschichtung ist transparent, schränkt die Durchsicht durch die Scheibe also nicht merklich ein. Die Absorption der Beschichtung beträgt bevorzugt von etwa 1 % bis etwa 20 % im sichtbaren Spektralbereich. Unter dem sichtbaren Spektralbereich wird der Spektralbereich von 380 nm bis 780 nm verstanden.

Ist eine erste Schicht oberhalb einer zweiten Schicht angeordnet, so bedeutet dies im Sinne der Erfindung, dass die erste Schicht weiter vom Substrat entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht. Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird.

Die Beschichtung ist typischerweise vollflächig auf der Substratoberfläche aufgebracht, eventuell mit Ausnahme eines umlaufenden Randbereichs und/oder anderer lokal begrenzter Bereich, die beispielsweise zur Datenübertragung dienen können. Der beschichtete Anteil der Substratoberfläche beträgt bevorzugt mindestens 90%.

Enthält eine Schicht oder ein sonstiges Element zumindest ein Material, so schließt das im Sinne der Erfindung den Fall ein, dass die Schicht aus dem Material besteht, was grundsätzlich auch bevorzugt ist. Die im Rahmen der vorliegenden Erfindung beschriebenen Verbindungen, insbesondere Oxide, Nitride und Carbide können grundsätzlich stöchiometrisch, unterstöchiometrisch oder überstöchiometrisch sein, auch wenn dem besseren Verständnis halber die stöchiometrischen Summenformeln erwähnt werden.

Für die verminderte Sichtbarkeit von Fingerabdrücken oder Oberflächenkontaminationen ist das erfindungsgemäße Auftreten der lokalen Extrema des Reflexionsgrads entscheidend. Diese Eigenschaften können grundsätzlich durch eine Vielzahl von Ausgestaltungen des Schichtaufbaus der Beschichtung realisiert werden, und die Erfindung soll nicht auf einen bestimmten Schichtaufbau beschränkt sein. Grundsätzlich wird die Extremwertverteilung durch die Auswahl der Schichtenfolge, der Materialien der Einzelschichten und die jeweiligen Schichtdicken bestimmt, wobei sie durch eine nach dem Beschichten stattfindende Temperaturbehandlung beeinflusst werden kann. Es haben sich jedoch bestimmte Ausgestaltungen auch hinsichtlich eines optimierten Materialeinsatzes und der sonstigen optischen Eigenschaften als besonders vorteilhaft erwiesen, die nachstehend vorgestellt werden.

Die elektrisch leitfähige Schicht weist bevorzugt einen Brechungsindex von 1,7 bis 2,3 auf. Die elektrisch leitfähige Schicht enthält in einer vorteilhaften Ausgestaltung zumindest ein transparentes, elektrisch leitfähiges Oxid (TCO, *transparent conductive oxide*). Solche Schichten sind korrosionsbeständig und können auf exponierten Oberflächen eingesetzt werden. Die elektrisch leitfähige Schicht enthält bevorzugt Indium-Zinnoxid (ITO, *indium tin oxide*), was sich besonders bewährt hat, insbesondere aufgrund eines geringen spezifischen Widerstands und einer geringen Streuung hinsichtlich des Flächenwiderstands. Die leitfähige Schicht kann alternativ aber auch beispielsweise Indium-Zink-Mischoxid (IZO), Gallium-dotiertes Zinnoxid (GZO), Fluordotiertes Zinnoxid (SnO₂:F) oder Antimon-dotiertes Zinnoxid (SnO₂:Sb) enthalten.

Die Dicke der elektrisch leitfähigen Schicht beträgt bevorzugt von 50 nm bis 130 nm, besonders bevorzugt von 60 nm bis 100 nm, beispielsweise von 65 nm bis 80 nm. Damit werden besonders gute Ergebnisse hinsichtlich der elektrischen Leitfähigkeit erreicht bei gleichzeitiger hinreichender optischer Transparenz.

Erfindungsgemäß umfasst die Beschichtung eine dielektrische untere Entspiegelungsschicht, die unterhalb der elektrisch leitfähigen Schicht angeordnet ist. Der Brechungsindex der unteren Entspiegelungsschicht beträgt von 1,3 bis 1,8. Die Dicke der unteren Entspiegelungsschicht beträgt von 10 nm bis 20 nm.

Erfindungsgemäß umfasst die Beschichtung eine dielektrische obere Entspiegelungsschicht, die oberhalb der elektrisch leitfähigen Schicht angeordnet ist.

Der Brechungsindex der oberen Entspiegelungsschicht beträgt von 1,3 bis 1,8. Die Dicke der oberen Entspiegelungsschicht beträgt von 45 nm bis 55 nm.

Erfindungsgemäß weist die Beschichtung sowohl eine untere Entspiegelungsschicht unterhalb der elektrisch leitfähigen Schicht als auch eine obere Entspiegelungsschicht oberhalb der elektrisch leitfähigen Schicht auf.

Die Entspiegelungsschichten bewirken insbesondere vorteilhafte optische Eigenschaften der Scheibe. So setzten sie den Reflexionsgrad herab und erhöhen dadurch die Transparenz der Scheibe und stellen einen neutralen Farbeindruck sicher. Die Entspiegelungsschichten enthalten Siliziumoxid, Aluminiumoxid, Magnesiumfluorid oder Kalziumfluorid. Das Siliziumoxid kann Dotierungen aufweisen und ist bevorzugt mit Aluminium (SiO₂:Al), mit Bor (SiO₂:B), mit Titan (SiO₂:Ti) oder mit Zirkonium dotiert (SiO₂:Zr). Die Schichten können alternativ aber auch beispielsweise Aluminiumoxid (Al₂O₃) enthalten.

Erfindungsgemäß ist die obere Entspiegelungsschicht die oberste Schicht der Beschichtung. Sie weist also den größten Abstand zur Substratoberfläche auf und ist die abschließende Schicht des Schichtstapels, die freiliegend, exponiert sowie für Personen zugänglich und berührbar ist. In diesem Fall sind die optischen Eigenschaften des Schichtstapels optimal im Hinblick auf eine verminderte Sichtbarkeit von Fingerabdrücken. Weitere Schichten, insbesondere mit höherem Brechungsindex als die Entspiegelungsschicht, oberhalb der Entspiegelungsschicht würden die optischen Eigenschaften verändern und könnten den gewünschten Effekt herabsetzen.

Es hat sich gezeigt, dass der Sauerstoffgehalt der elektrisch leitfähigen Schicht, insbesondere wenn diese auf einem TCO basiert, einen wesentlichen Einfluss auf deren Eigenschaften hat, insbesondere auf die Transparenz und Leitfähigkeit. Die Herstellung der Scheibe umfasst typischerweise eine Temperaturbehandlung, beispielsweise einen thermischen Vorspannprozess, wobei Sauerstoff zur leitfähigen Schicht diffundieren und diese oxidieren kann. In einer vorteilhaften Ausgestaltung umfasst die Beschichtung zwischen der elektrisch leitfähigen Schicht und der oberen Entspiegelungsschicht eine dielektrische Barriereschicht zur Regulierung von Sauerstoffdiffusion mit einem Brechungsindex von mindestens 1,9. Die Barriereschicht dient dazu, die Sauerstoffzufuhr auf ein optimales Maß einzustellen. Besonders gute Ergebnisse werden erzielt, wenn der Brechungsindex der Barriereschicht von 1,9 bis 2,5 beträgt.

Die dielektrische Barriereschicht zur Regulierung von Sauerstoffdiffusion enthält zumindest ein Metall, ein Nitrid oder ein Carbid. Die Barriereschicht kann beispielsweise Titan, Chrom, Nickel, Zirkonium, Hafnium, Niob, Tantal oder Wolfram enthalten oder ein Nitrid oder Carbid von Wolfram, Niob, Tantal, Zirkonium, Hafnium, Chrom, Titan, Silizium oder Aluminium. In einer bevorzugten Ausgestaltung enthält die Barriereschicht Siliziumnitrid (Si₃N₄) oder Siliziumcarbid, insbesondere Siliziumnitrid (Si₃N₄), womit besonders gute Ergebnisse erzielt werden. Das Siliziumnitrid kann Dotierungen aufweisen und ist in einer bevorzugten Weiterbildung mit Aluminium (Si₃N₄:Al), mit Zirkonium (Si₃N₄:Zr), mit Titan (Si₃N₄:Ti), oder mit Bor dotiert (Si₃N₄:B). Bei einer Temperaturbehandlung nach dem Aufbringen der erfindungsgemäßen Beschichtung kann das Siliziumnitrid teilweise oxidiert werden. Eine als Si₃N₄ abgeschiedene Barrriereschicht enthält dann nach der Temperaturbehandlung SiₓN_{y}O_{z}, wobei der Sauerstoffgehalt typischerweise von 0 Atom-% bis 35 Atom-% beträgt.

Die Dicke der Barriereschicht beträgt bevorzugt von 5 nm bis 20 nm, besonders bevorzugt von 7 nm bis 12 nm, beispielsweise von 8 nm bis 10 nm. Damit wird der Sauerstoffgehalt der leitfähigen Schicht besonders vorteilhaft reguliert. Die Dicke der Barriereschicht wird hinsichtlich der Sauerstoffdiffusion gewählt, weniger hinsichtlich der optischen Eigenschaften der Scheibe. Es hat sich jedoch gezeigt, dass Barriereschichten mit Dicken im angegebenen Bereich mit der erfindungsgemäßen Beschichtung und deren optischen Anforderungen kompatibel sind.

In einer vorteilhaften Ausgestaltung umfasst die Beschichtung unterhalb der elektrisch leitfähigen Schicht, und gegebenenfalls unterhalb der unteren Entspiegelungsschicht, eine dielektrische Blockerschicht gegen Alkalidiffusion. Durch die Blockerschicht wird die Diffusion von Alkali-Ionen aus dem Glassubstrat in das Schichtsystem reduziert oder unterbunden. Alkali-Ionen können die Eigenschaften der Beschichtung negativ beeinflussen. Weiterhin trägt die Blockerschicht im Zusammenspiel mit der unteren Entspiegelungsschicht zur Einstellung der Optik des Gesamtschichtaufbaus vorteilhaft bei. Der Brechungsindex der Blockerschicht beträgt bevorzugt mindestens 1,9. Besonders gute Ergebnisse werden erzielt, wenn der Brechungsindex der Blockerschicht von 1,9 bis 2,5 beträgt. Die Blockerschicht enthält bevorzugt ein Oxid, ein Nitrid oder ein Carbid, bevorzugt von Wolfram, Chrom, Niob, Tantal, Zirkonium, Hafnium,Titan, Silizium oder Aluminium, beispielsweise Oxide wie WOs, Nb₂O₅, Bi₂O₃, TiO₂, Ta₂O₅, Y₂O₃, ZrO₂, HfO₂ SnO₂, oder ZnSnOₓ, oder Nitride wie AIN, TiN, TaN, ZrN oder NbN. Die Blockerschicht enthält besonders bevorzugt Siliziumnitrid (Si₃N₄), womit besonders gute Ergebnisse erzielt werden. Das Siliziumnitrid kann Dotierungen aufweisen und ist in einer bevorzugten Weiterbildung mit Aluminium (Si₃N₄:Al), mit Titan (Si₃N₄:Ti), mit Zirkonium (Si₃N₄:Zr) oder mit Bor dotiert (Si₃N₄:B). Die Dicke der Blockerschicht beträgt bevorzugt von 10 nm bis 50 nm, besonders bevorzugt von von 20 nm bis 40 nm, beispielsweise von 25 nm bis 35 nm. Die Blockerschicht ist bevorzugt die unterste Schicht des Schichtstapels, hat also direkten Kontakt zur Substratoberfläche, wo sie ihre Wirkung optimal entfalten kann.

Die Beschichtung besteht in einer vorteilhaften Ausgestaltung ausschließlich aus Schichten mit einem Brechungsindex von mindestens 1,9 oder von höchstens 1,8, bevorzugt höchstens 1,6. In einer besonders bevorzugten Ausgestaltung besteht die Beschichtung nur aus den beschriebenen Schichten und enthält keine weiteren Schichten. Die Beschichtung besteht dann aus folgenden Schichten in der angegebenen Reichenfolge ausgehend von der Substratoberfläche:
- Blockerschicht gegen Alkalidiffusion
- untere Entspiegelungsschicht
- elektrisch leitfähige Schicht
- Barriereschicht zur Regulierung von Sauerstoffdiffusion
- obere Entspiegelungsschicht

Die innenraumseitige Emissivität der erfindungsgemäßen Scheibe beträgt bevorzugt kleiner oder gleich 45%, besonders bevorzugt kleiner oder gleich 35%, ganz besonders bevorzugt kleiner oder gleich 30%. Mit innenraumseitiger Emissivität wird dabei das Maß bezeichnet, welches angibt, wie viel Wärmestrahlung die Scheibe in Einbaulage im Vergleich zu einem idealen Wärmestrahler (einem schwarzen Körper) in einen Innenraum, beispielsweise eines Gebäudes oder eines Fahrzeugs abgibt. Unter Emissivität wird im Sinne der Erfindung der normale Emissionsgrad bei 283 K nach der Norm EN 12898 verstanden.

Der Flächenwiderstand der erfindungsgemäßen Beschichtung beträgt bevorzugt von 10 Ohm/Quadrat bis 100 Ohm/Quadrat, besonders bevorzugt von 15 Ohm/Quadrat bis 35 Ohm/Quadrat.

Das Substrat ist aus einem elektrisch isolierenden, insbesondere starren Werkstoff gefertigt, vorzugsweise aus Glas oder Kunststoff. Das Substrat enthält in einer bevorzugten Ausgestaltung Kalk-Natron-Glas, kann aber grundsätzlich auch andere Glassorten enthalten, beispielsweise Borsilikatglas oder Quarzglas. Das Substrat enthält in einer weiteren bevorzugten Ausgestaltung Polycarbonat (PC) oder Polymethylmethacrylat (PMMA). Das Substrat kann weitestgehend transparent oder auch getönt oder gefärbt sein. Das Substrat weist bevorzugt eine Dicke von 0,1 mm bis 20 mm auf, typischerweise von 2 mm bis 5 mm. Das Substrat kann plan oder gebogen ausgebildet sein. In einer besonders vorteilhaften Ausgestaltung ist das Substrat eine thermisch vorgespannte Glasscheibe.

Die Erfindung umfasst außerdem ein Verfahren zur Herstellung einer erfindungsgemäßen Scheibe mit elektrisch leitfähiger Beschichtung, wobei
(a) auf eine exponierte Oberfläche eines Substrats eine elektrisch leitfähige Beschichtung aufgebracht wird, welche mindestens eine elektrisch leitfähige Schicht umfasst; und
(b) das Substrat mit der Beschichtung einer Temperaturbehandlung bei mindestens 100°C unterzogen wird, wonach die Scheibe ein lokales Minimum des Reflexionsgrads im Bereich von 310 nm bis 360 nm, insbesondere 320 nm bis 350 nm, und ein lokales Maximum des Reflexionsgrads im Bereich von 400 nm bis 460 nm aufweist.

Die Scheibe wird nach dem Aufbringen der beheizbaren Beschichtung einer Temperaturbehandlung unterzogen, durch die insbesondere die Kristallinität der funktionellen Schicht verbessert wird. Die Temperaturbehandlung erfolgt bevorzugt bei mindestens 300°C. Die Temperaturbehandlung verringert insbesondere den Flächenwiderstand der Beschichtung. Außerdem werden die optischen Eigenschaften der Scheibe deutlich verbessert, insbesondere die Transmission erhöht.

Die Temperaturbehandlung kann auf verschiedene Arten erfolgen, beispielsweise durch Erwärmen der Scheibe mittels eines Ofens oder eines Heizstrahlers. Alternativ kann die Temperaturbehandlung auch durch Bestrahlung mit Licht erfolgen, beispielsweise mit einer Lampe oder einem Laser als Lichtquelle.

In einer vorteilhaften Ausführung erfolgt die Temperaturbehandlung im Falle eines Glassubstrats im Rahmen eines thermischen Vorspannprozesses. Dabei wird das erwärmte Substrat mit einem Luftstrom beaufschlagt, wobei es rasch abgekühlt wird. Es bilden sich Druckspannungen an der Scheibenoberfläche und Zugspannungen im Scheibenkern aus. Die charakteristische Spannungsverteilung erhöht die Bruchfestigkeit der Glasscheiben. Dem Vorspannen kann auch ein Biegeprozess vorangehen.

Die einzelnen Schichten der beheizbaren Beschichtung werden durch an sich bekannte Verfahren abgeschieden, bevorzugt durch magnetfeldunterstützte Kathodenzerstäubung. Das ist besonders vorteilhaft im Hinblick auf eine einfache, schnelle, kostengünstige und gleichmäßige Beschichtung des Substrats. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff. Die Schichten können aber auch durch andere, dem Fachmann bekannte Verfahren aufgebracht werden, beispielsweise durch Aufdampfen oder chemische Gasphasenabscheidung (chemical vapour deposition, CVD), durch Atomlagenabscheidung (atomic layer deposition, ALD), durch plasmagestützte Gasphasenabscheidung (PECVD) oder durch nasschemische Verfahren.

Vor der elektrisch leitfähigen Schicht wird in einer vorteilhaften Ausführung eine Blockerschicht gegen Alkalidiffusion aufgebracht. Vor der elektrisch leitfähigen Schicht und gegebenenfalls nach der Blockerschicht wird in einer vorteilhaften Ausführung eine untere Entspiegelungsschicht aufgebracht. Nach der leitfähigen Schicht wird in einer vorteilhaften Ausführung eine Barriereschicht zur Regulierung von Sauerstoffdiffusion aufgebracht. Nach der leitfähigen Schicht und gegebenfalls nach der Barriereschicht wird in einer vorteilhaften Ausführung eine obere Entspiegelungsschicht aufgebracht.

Zur Auswahl geeigneter Materialien und Schichtdicken, um das erfindungsgemäßen Reflexionsspektrum zu realisieren, kann sich der Fachmann beispielsweise fachüblicher Simulationen bedienen.

Die Erfindung umfasst außerdem die Verwendung einer erfindungsgemäßen Scheibe in Gebäuden, in elektrischen oder elektronischen Geräten oder in Fortbewegungsmitteln für den Verkehr auf dem Lande, in der Luft oder zu Wasser. Die Scheibe wird dabei bevorzugt Fensterscheibe verwendet, beispielsweise als Gebäudefensterscheibe oder als Dachscheibe, Seitenscheibe, Heckscheibe oder Windschutzscheibe eines Fahrzeugs, insbesondere Kraftfahrzeugs. Die Scheibe wird alternativ bevorzugt als elektrisch basierter kapazitiver oder resistiver Sensor für taktile Anwendungen, beispielsweise als *Touch Screen* oder *Touch Panel.*

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Ausgestaltung der erfindungsgemäßen Scheibe mit beheizbarer Beschichtung,
- Fig. 2: ein Flussdiagramm einer Ausführungsform des erfindungsgemäßen Verfahrens,
- Fig. 3: ein Diagramm des Reflexionsgrads R_{L} in Abhängigkeit von der Wellenlänge für zwei erfindungsgemäße Beispiele und zwei Vergleichsbeispiele und
- Fig. 4: Simulationsergebnisse des relativen Reflexionsgrads in Abhängigkeit der Dicke eines auf der Beschichtung 2 abgeschiedenen Ölfilms für die Beispiele und Vergleichsbeispiele aus Fig. 3.

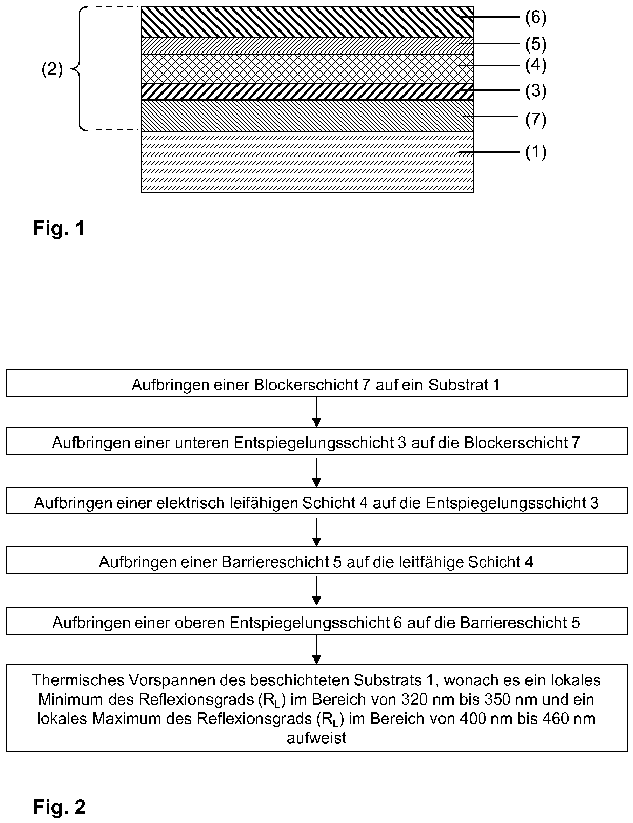

Fig. 1 zeigt einen Querschnitt durch eine Ausgestaltung der erfindungsgemäßen Scheibe mit dem Substrat 1 und der elektrisch leitfähigen Beschichtung 2. Das Substrat 1 ist beispielsweise eine Glasscheibe aus getöntem Kalk-Natron-Glas und weist eine Dicke von 2,1 mm auf. Die Beschichtung 2 ist eine Wärmestrahlung reflektierende Beschichtung (Low-E-Beschichtung). Die Scheibe ist beispielsweise als Dachscheibe eines Kraftfahrzeugs vorgesehen. Dachscheiben werden typischerweise als Verbundglasscheiben ausgeführt, wobei das Substrat 1 über seine von der Beschichtung 2 abgewandte Oberfläche mittels einer thermoplastischen Folie mit einer nicht dargestellten Außenscheibe verbunden ist. Das Substrat 1 bildet die Innenscheibe des Verbundglases, wobei die Beschichtung 2 auf der exponierten innenraumseitigen Oberfläche aufgebracht ist, die von den Fahrzeuginsassen direkt berührt werden kann. Dadurch können sich Fingerabdrücke auf der Beschichtung 2 ansammeln. Die optischen Eigenschaften der Beschichtung 2 sind dahingehend optimiert, dass Fingerabdrücke weniger stark sichtbar sind als bei herkömmlichen Beschichtungen. Dies wird erfindungsgemäß dadurch erreicht, dass die Beschichtung derart ausgestaltet ist, dass die Scheibe ein lokales Minimum des Reflexionsgrads R_{L} im Bereich von 320 nm bis 350 nm und ein lokales Maximum des Reflexionsgrads R_{L} im Bereich von 400 nm bis 460 nm aufweist. Überraschenderweise sind Fingerabdrücke unter dieser Voraussetzung weniger stark wahrzunehmen.

Die Beschichtung 2 ist eine Abfolge dünner Schichten, die ausgehend vom Substrat 1 aus folgenden Einzelschichten besteht: eine Blockerschicht 7 gegen Alkalidiffusion, eine untere Entspiegelungsschicht 3, eine elektrisch leitfähige Schicht 4, eine Barriereschicht 5 zur Regulierung der Sauerstoffdiffusion Schicht 5 und eine obere Entspiegelungsschicht 6. Die Materialien und Schichtdicken sind in Tabelle 1 zusammengefasst. Die einzelnen Schichten der Beschichtung 2 wurden durch magnetfeldunterstützte Kathodenstrahlzerstäubung abgeschieden.

**Tabelle 1**

| **Schicht** | **Bezugszeichen** | | **Material** | **Dicke** |
|---|---|---|---|---|
| obere Entspiegelungsschicht | 6 | 2 | SiO₂:Al | 50 nm |
| Barriereschicht | 5 | | Si₃N₄:Al | 9 nm |
| elektrisch leitfähige Schicht | 4 | | ITO | 70 nm |
| untere Entspiegelungsschicht | 3 | | SiO₂:Al | 17 nm |
| Blockerschicht | 7 | | Si₃N₄:Al | 30 nm |
| Substrat | 1 | | Kalk-Natron-Glas | 2,1 mm |

Fig. 2 zeigt ein Flussdiagramm eines Ausführungsbeispiels des erfindungsgemäßen Herstellungsverfahrens.

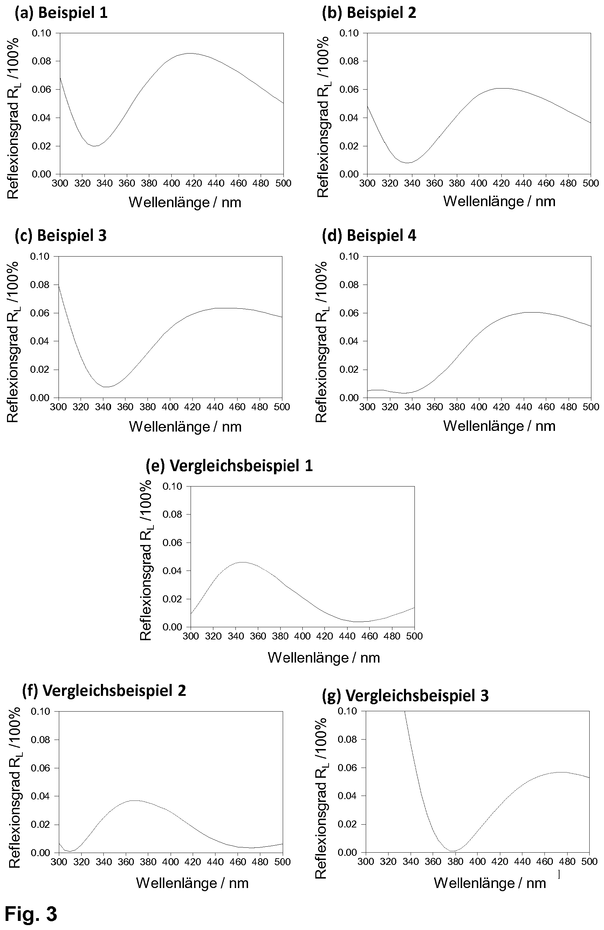

Fig. 3 zeigt Diagramme des Reflexionsgrad R_{L} für vier erfindungsgemäße Beispiele und drei Vergleichsbeispiele. Die Materialien und Schichtdicken der Beschichtung 2 der Beispiele 1-4 sind in Tabelle 2 zusammengefasst, diejenigen der Vergleichsbeispiele 1-3 in Tabelle 3. In den Beispielen 1-4 bestand die Scheibe aus einem Substrat 1 aus getöntem Kalk-Natron-Glas mit einer Lichttransmission T_{L} von etwa 25% und der Beschichtung 2, welche ausgehend von Substrat 1 aufgebaut war aus einer Blockerschicht 7, einer unteren Entspiegelungsschicht 3, einer elektrisch leitfähigen Schicht 4, einer Barriereschicht 5 und einer oberen Entspiegelungsschicht 6. Die Schichten waren aus den gleichen Materialien ausgebildet, wobei sich die Beschichtungen 2 der Beispiele 1-4 in den Schichtdicken unterschieden. Für die erfindungsgemäßen Beispiele 1-4 war die Beschichtung 2 im Unterschied zu den Vergleichsbeispielen jedoch jeweils so eingestellt, dass die Scheibe ein lokales Minimum des Reflexionsgrads R_{L} im Bereich von 320 nm bis 350 nm und ein lokales Maximum des Reflexionsgrads R_{L} im Bereich von 400 nm bis 460 nm aufwies, was in der Figur zu erkennen ist. Alle Scheiben waren einer Temperaturbehandlung im Rahmen eines Glasbiegeprozesses bei etwa 650°C unterzogen worden.

**Tabelle 2**

| **Schicht** | **Material** | **Dicke** | | | |
|---|---|---|---|---|---|
| | | **Beispiel 1** | **Beispiel 2** | **Beispiel 3** | **Beispiel 4** |
| 6 | SiO₂ | 50 nm | 55 nm | 50 nm | 50 nm |
| 5 | Si₃N₄ | 9 nm | 9 nm | 9 nm | 9 nm |
| 4 | ITO | 70 nm | 80 nm | 70 nm | 120 nm |
| 3 | SiO₂ | 17 nm | 10 nm | 30 nm | 15 nm |
| 7 | Si₃N₄ | 30 nm | 25 nm | 20 nm | 10 nm |
| 1 | Glas | 2,1 mm | 2,1 mm | 2,1 mm | 2,1 mm |

**Tabelle 3**

| **Schicht** | **Material** | **Dicke** | | |
|---|---|---|---|---|
| | | **Vergleich 1** | **Vergleich 2** | **Vergleich 3** |
| - | TiO₂ | - | - | 5 nm |
| 6 | SiO₂ | 70 nm | 70 nm | 50 nm |
| 5 | Si₃N₄ | 9 nm | 9 nm | 9 nm |
| 4 | ITO | 70 nm | 80 nm | 70 nm |
| 3 | SiO₂ | 30 nm | 30 nm | 17 nm |
| 7 | Si₃N₄ | - | - | 30 nm |
| 1 | Glas | 2,1 mm | 2,1 mm | 2,1 mm |

Die Vergleichsbeispiele 1 und 2 unterschieden sich grundlegend von den erfindungsgemäßen Beispielen durch die Abwesenheit der Blockerschicht 7, was zu signifikanten Änderungen des Reflexionsspektrums führte, so dass die lokalen Extrema nicht erfindungsgemäß auftraten. Im Vergleichsbeispiel 3 war oberhalb der oberen Entspiegelungsschicht 6 noch eine weitere Schicht aus TiO₂ aufgebracht, wie sie beispielsweise als photokatalytische Schicht in selbstreinigenden Beschichtungen eingesetzt wird. Die obere Entspiegelungsschicht 6 war folglich nicht die oberste Schicht der Beschichtung 2.

Im Unterschied zu den erfindungsgemäßen Beispielen 1-4 waren die lokalen Extrema des Reflexionsgrades R_{L} bei den Vergleichsbeispielen 1-3 nicht erfindungsgemäß im Spektrum positioniert. Das Auftreten der lokalen Extrema ist in Tabelle 4 zusammengefasst. Die dargestellten Werte des Reflexionsgrads R_{L} wurden durch Simulationen mit der Software CODE ermittelt.

**Tabelle 4**

| | Minimum R_{L} | Maximum R_{L} |
|---|---|---|
| | | |
| **Bsp. 1** | 335 nm | 420 nm |
| **Bsp. 2** | 335 nm | 425 nm |
| **Bsp. 3** | 345 nm | 450 nm |
| **Bsp. 4** | 335 nm | 450 nm |
| | | |
| **Vgl. 1** | < 300 nm | 350 nm |
| **Vgl. 2** | 305 nm | 370 nm |
| **Vgl. 3** | 375 nm | 425 nm |

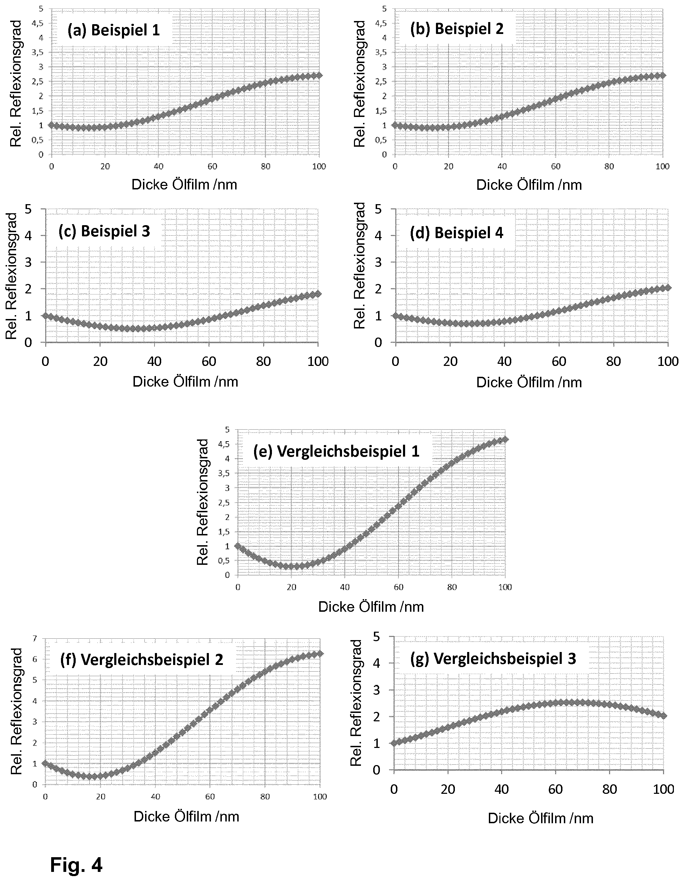

Zur Berücksichtigung des Einflusses eines Fingerabdrucks wurden die Simulationen um einen Ölfilm (Brechungsindex 1,58) auf der Beschichtung 2 erweitert. Es wurde dann für die Beispiele und Vergleichsbeispiele der relative Reflexionsgrad berechnet als Quotient (Reflexionsgrad der Scheibe mit Ölfilm) / (Reflexionsgrad der Scheibe ohne Ölfilm). Das Ergebnis ist in Abhängigkeit der Dicke des Ölfilms in Fig. 4 dargestellt.

Bei den erfindungsgemäßen Beispielen 1 und 2 beträgt der relative Reflexionsgrad für dünne Ölfilme bis etwa 20 nm etwa 1, die Reflexion ändert sich also durch den Ölfilm kaum. Bei dickeren Ölfilmen steigt der Reflexionsgrad langsam an bis auf einen Wert von etwa 2,5 bei einem Ölfilm von 100 nm. Bei den Beispielen 3 und 4 nimmt der relative Reflexionsgrad anfangs leicht ab und steigt ab etwa 30 nm Ölfilmdicke ebenso langsam an.

Bei den Vergleichsbeispielen 1 und 2 ist ein deutlich anderes Verhalten zu erkennen. Schon bei dünnen Ölfilmen ändert sich die Reflexion deutlich und der relative Reflexionsgrad nimmt zunächst stark ab. Ersteigt dann ebenfalls ab einer Ölfilmdicke von etwa 20 nm an, jedoch deutlich stärker als bei den erfindungsgemäßen Beispielen. Bei Vergleichsbeispiel 3 ist bereits bei sehr dünnen Ölfilmen ein recht starker Anstieg des relativen Reflexionsgrads zu erkennen.

Aus den Beispielen und Vergleichsbeispielen ist deutlich zu erkennen, dass die Anwesenheit eines Ölfilms bei den erfindungsgemäßen Beschichtungen 2 zu einer deutlich geringer ausgeprägten Änderung des Reflexionsgrades führt als bei nicht erfindungsgemäßen Beschichtungen. Fingerabdrücke, die im Wesentlichen Fettablagerungen darstellen und einem Ölfilm optisch sehr ähnlich sind, sind also aufgrund des geringeren Kontrasts deutlich weniger sichtbar. Dass die Sichtbarkeit von Fingerabdrücken allein durch die Optimierung der optischen Eigenschaften der Beschichtung reduziert werden kann, war für den Fachmann unerwartet und überraschend.

Weitere erfindungsgemäße Beispiele (Bsp. 6-12) und Vergleichsbeispiele (Vgl. 4-12) sind in Tabelle 5 dargestellt. Es sind jeweils die Dicken der einzelnen Schichten angegeben, von links nach rechts ausgehend vom Substrat 1 (getöntes Kalk-Natron-Glas). Die spektrale Position der lokalen Extrema des Reflexionsgrades R_{L} ist in Tabelle 6 zusammengefasst. Alle Scheiben waren wiederum einer Temperaturbehandlung im Rahmen eines Glasbiegeprozesses bei etwa 650°C unterzogen worden.

**Tabelle 5**

| **Schicht** | 1 | 7 | 3 | 4 | 5 | 6 | |
|---|---|---|---|---|---|---|---|
| **Material** | Glas | Si₃N₄ | SiO₂ | ITO | Si₃N₄ | SiO₂ | TiO₂ |
| | | | | | | | |
| **Bsp. 6** | 2,1 mm | 30 nm | 30 nm | 75 nm | 9 nm | 30 nm | - |
| **Bsp. 7** | 2,1 mm | 40 nm | 10 nm | 70 nm | 9 nm | 50 nm | - |
| **Bsp. 8** | 2,1 mm | 15 nm | 20 nm | 90 nm | 9 nm | 50 nm | - |
| **Bsp. 9** | 2,1 mm | 20 nm | 15 nm | 100 nm | 9 nm | 45 nm | - |
| **Bsp. 10** | 2,1 mm | 25 nm | 20 nm | 60 nm | 9 nm | 50 nm | - |
| **Bsp. 11** | 2,1 mm | 25 nm | 25 nm | 50 nm | 9 nm | 60 nm | - |
| **Bsp. 12** | 2,1 mm | 20 nm | 10 nm | 70 nm | 9 nm | 70 nm | - |
| | | | | | | | |
| **Vgl. 4** | 2,1 mm | 20 nm | 10 nm | 70 nm | 9 nm | 70 nm | 5 nm |
| **Vgl. 5** | 2,1 mm | - | 30 nm | 70 nm | 9 nm | 50 nm | - |
| **Vgl. 6** | 2,1 mm | 0 nm | 30 nm | 70 nm | 9 nm | 50 nm | 5 nm |
| **Vgl. 7** | 2,1 mm | 20 nm | 15 nm | 100 nm | 9 nm | 45 nm | 5 nm |
| **Vgl. 8** | 2,1 mm | - | 30 nm | 100 nm | 9 nm | 55 nm | - |
| **Vgl. 9** | 2,1 mm | 10 nm | 15 nm | 120 nm | 9 nm | 50 nm | 5 nm |
| **Vgl. 10** | 2,1 mm | - | 30 nm | 120 nm | 9 nm | 75 nm | - |
| **Vgl. 11** | 2,1 mm | 25 nm | 20 nm | 60 nm | 9 nm | 50 nm | 5 nm |
| **Vgl. 12** | 2,1 mm | - | 30 nm | 50 nm | 9 nm | 50 nm | - |

**Tabelle 6**

| | Minimum R_{L} | Maximum R_{L} |
|---|---|---|
| | | |
| **Bsp. 6** | 330 nm | 425 nm |
| **Bsp. 7** | 330 nm | 415 nm |
| **Bsp. 8** | 340 nm | 450 nm |
| **Bsp. 9** | 345 nm | 455 nm |
| **Bsp. 10** | 320 nm | 400 nm |
| **Bsp. 11** | 345 nm | 410 nm |
| **Bsp. 12** | 355 nm | 430 nm |
| | | |
| **Vgl. 4** | 385 nm | 455 nm |
| **Vgl. 5** | 385 nm | 610 nm |
| **Vgl. 6** | 300 nm | 370 nm |
| **Vgl. 7** | 385 nm | 500 nm |
| **Vgl. 8** | 310 nm | 375 nm |
| **Vgl. 9** | 390 nm | 490 nm |
| **Vgl. 10** | 380 nm | 460 nm |
| **Vgl. 11** | 365 nm | 455 nm |
| **Vgl. 12** | 350 nm | 560 nm |

In der Realität liegen Fingerabdrücke mit einer großen Bandbreite an Dicken vor, darunter auch solche mit Schichtdicken über einem Mikrometer. Bei solch dicken Ablagerungen spielen Effekte der Interferenzoptik keine entscheidende Rolle mehr, so dass die Sichtbarkeit durch die optischen Eigenschaften der Beschichtung 2 nicht mehr signifikant beeinflusst werden kann. Für die Mehrheit der Fingerabdrücke im Bereich von bis zu etwa 100 Nanometer aber kann die Sichtbarkeit deutlich reduziert werden. Der Gesamteindruck der Scheibe wird dadurch wesentlich verbessert.

### Bezugszeichenliste:

- (1): Substrat
- (2): beheizbare Beschichtung
- (3): untere Entspiegelungsschicht
- (4): elektrisch leitfähige Schicht
- (5): Barriereschicht zur Regulierung von Sauerstoffdiffusion
- (6): obere Entspiegelungsschicht
- (7): Blockerschicht gegen Alkalidiffusion

- R_{L}: Reflexionsgrad (nach DIN EN410)

## Patentansprüche

1. Scheibe mit elektrisch leitfähiger Beschichtung, umfassend ein Substrat (1) und eine elektrisch leitfähige Beschichtung (2) auf einer exponierten Oberfläche des Substrats (1), welche ausgehend vom Substrat (1) mindestens
- eine Blockerschicht (7) gegen Alkalidiffusion mit einem Brechungsindex von mindestens 1,9,
- eine dielektrische untere Entspiegelungsschicht (3) mit einem Brechungsindex von 1,3 bis 1,8,
- eine elektrisch leitfähige Schicht (4),
- eine dielektrische Barriereschicht (5) zur Regulierung von Sauerstoffdiffusion mit einem Brechungsindex von mindestens 1,9 und
- eine dielektrische obere Entspiegelungsschicht (6) mit einem Brechungsindex von 1,3 bis 1,8 umfasst, wobei die obere Entspiegelungsschicht (6) die oberste Schicht der Beschichtung (2) ist, wobei die untere Entspiegelungsschicht (3) und/oder die obere Entspiegelungsschicht (6) Siliziumoxid, Aluminiumoxid, Magnesiumfluorid oder Kalziumfluorid enthält,
wobei die untere Entspiegelungsschicht (3) eine Dicke von 10 nm bis 20 nm aufweist und wobei die obere Entspiegelungsschicht (6) eine Dicke von 45 nm bis 55 nm aufweist, wobei die Scheibe ein lokales Minimum des Reflexionsgrads (R_{L}) im Bereich von 310 nm bis 360 nm und ein lokales Maximum des Reflexionsgrads (R_{L}) im Bereich von 400 nm bis 460 nm aufweist.

2. Scheibe nach Anspruch 1, wobei die elektrisch leitfähige Schicht (4) ein transparentes leitfähiges Oxid (TCO) enthält, bevorzugt Indium-Zinnoxid (ITO).

3. Scheibe nach Anspruch 1 oder 2, wobei die elektrisch leitfähige Schicht (4) eine Dicke von 50 nm bis 150 nm aufweist, bevorzugt von 60 nm bis 100 nm.

4. Scheibe nach einem der Ansprüche 1 bis 3, wobei das in der unteren Entspiegelungsschicht (3) und/oder in der oberen Entspiegelungsschicht (6) enthaltene Siliziumoxid Aluminium-dotiertes, Zirkonium-dotiertes, Titan-dotiertes oder Bor-dotiertes Siliziumoxid ist.

5. Scheibe nach einem der Ansprüche 1 bis 4, wobei die Barriereschicht (5) einen Brechungsindex von 1,9 bis 2,5 aufweist.

6. Scheibe nach einem der Ansprüche 1 bis 5, wobei die Barriereschicht (5) ein Metall, ein Nitrid oder ein Carbid enthält, bevorzugt Siliziumnitrid oder Siliziumcarbid, insbesondere Siliziumnitrid.

7. Scheibe nach einem der Ansprüche 1 bis 6, wobei die Barriereschicht (5) eine Dicke von 5 nm bis 20 nm aufweist, bevorzugt von 7 nm bis 12 nm.

8. Scheibe nach einem der Ansprüche 1 bis 7, wobei die Blockerschicht (7) einen Brechungsindex von 1,9 bis 2,5 aufweist.

9. Scheibe nach einem der Ansprüche 1 bis 8, wobei die Blockerschicht (7) Siliziumnitrid enthält, bevorzugt Aluminium-dotiertes, Zirkonium-dotiertes, Titan-dotiertes oder Bor-dotiertes Siliziumnitrid.

10. Scheibe nach einem der Ansprüche 1 bis 9, wobei die Blockerschicht (7) eine Dicke von 10 nm bis 50 nm aufweist, bevorzugt von 20 nm bis 40 nm.

11. Verfahren zur Herstellung einer Scheibe mit elektrisch leitfähiger Beschichtung nach einem der Ansprüche 1 bis 10, wobei
(a) auf eine exponierte Oberfläche eines Substrats (1) eine elektrisch leitfähige Beschichtung (2) aufgebracht wird, welche ausgehend vom Substrat (1) mindestens
- eine Blockerschicht (7) gegen Alkalidiffusion mit einem Brechungsindex von mindestens 1,9,
- eine dielektrische untere Entspiegelungsschicht (3) mit einem Brechungsindex von 1,3 bis 1,8,
- eine elektrisch leitfähige Schicht (4),
- eine dielektrische Barriereschicht (5) zur Regulierung von Sauerstoffdiffusion mit einem Brechungsindex von mindestens 1,9 und
- eine dielektrische obere Entspiegelungsschicht (6) mit einem Brechungsindex von 1,3 bis 1,8 umfasst; und
(b) das Substrat (1) mit der Beschichtung (2) einer Temperaturbehandlung bei mindestens 100°C unterzogen wird, wonach die Scheibe ein lokales Minimum des Reflexionsgrads (R_{L}) im Bereich von 310 nm bis 360 nm und ein lokales Maximum des Reflexionsgrads (R_{L}) im Bereich von 400 nm bis 460 nm aufweist.

12. Verwendung einer Scheibe nach einem der Ansprüche 1 bis 10 in Gebäuden, in elektrischen oder elektronischen Geräten oder in Fortbewegungsmitteln für den Verkehr auf dem Lande, in der Luft oder zu Wasser, insbesondere als Fensterscheibe, beispielsweise als Gebäudefensterscheibe oder Dachscheibe, Seitenscheibe, Heckscheibe oder Windschutzscheibe eines Fahrzeugs, oder als kapazitiver oder resistiver Sensor für taktile Anwendungen, beispielsweise als Touch Screen oder Touch Panel.

## Claims

1. Pane having an electrically conductive coating, comprising a substrate (1) and an electrically conductive coating (2) on an exposed surface of the substrate (1), which coating, starting from the substrate (1), at least comprises
- a blocking layer (7) against alkali diffusion having a refractive index of at least 1.9,
- a dielectric lower antireflection layer (3) having a refractive index of 1.3 to 1.8,
- an electrically conductive layer (4),
- a dielectric barrier layer (5) for regulating oxygen diffusion having a refractive index of at least 1.9, and
- a dielectric upper antireflection layer (6) having a refractive index of 1.3 to 1.8, wherein the upper antireflection layer (6) is the uppermost layer of the coating (2), wherein the lower reflection layer (3) and/or the upper reflection layer (6) contain silicon oxide, aluminum oxide, magnesium fluoride, or calcium fluoride,
wherein the lower reflection layer (3) has a thickness from 10 nm to 20 nm and
wherein the upper reflection layer (6) has a thickness from 45 nm to 55 nm,
wherein the pane has a local minimum of reflectance (R_{L}) in the range from 310 nm to 360 nm and a local maximum of reflectance (R_{L}) in the range from 400 nm to 460 nm.

2. Pane according to claim 1, wherein the electrically conductive layer (4) contains a transparent conductive oxide (TCO), preferably indium tin oxide (ITO).

3. Pane according to claim 1 or 2, wherein the electrically conductive layer (4) has a thickness of 50 nm to 150 nm, preferably of 60 nm to 100 nm.

4. Pane according to one of claims 1 through 3, wherein the silicone oxide contained in the lower antireflection layer (3) and/or the upper antireflection layer (6) is aluminum-doped, zirconium-doped, titanium-doped, or boron-doped silicon oxide.

5. Pane according to one of claims 1 through 4, wherein the barrier layer (5) has a refractive index of 1.9 to 2.5.

6. Pane according to one of claims 1 through 5, wherein the barrier layer (5) contains a metal, a nitride, or a carbide, preferably silicon nitride or silicon carbide, in particular silicon nitride.

7. Pane according to one of claims 1 through 6, wherein the barrier layer (5) has a thickness of 5 nm to 20 nm, preferably of 7 nm to 12 nm.

8. Pane according to one of claims 1 through 7, wherein the blocking layer (7) has a refractive index of 1.9 to 2.5.

9. Pane according to one of claims 1 through 8, wherein the blocking layer (7) contains silicon nitride, preferably aluminum-doped, zirconium-doped, titanium-doped, or boron-doped silicon nitride.

10. Pane according to one of claims 1 through 9, wherein the blocking layer (7) has a thickness of 10 nm to 50 nm, preferably of 20 nm to 40 nm.

11. Method for producing a pane having an electrically conductive coating according to one of claims 1 through 10, wherein
(a) an electrically conductive coating (2) is applied on an exposed surface of a substrate (1), which coating, starting from the substrate (1), at least comprises
- a blocking layer (7) against alkali diffusion having a refractive index of at least 1.9,
- a dielectric lower antireflection layer (3) having a refractive index of 1.3 to 1.8,
- an electrically conductive layer (4),
- a dielectric barrier layer (5) for regulating oxygen diffusion having a refractive index of at least 1.9, and
- a dielectric upper antireflection layer (6) having a refractive index of 1.3 to 1.8; and
(b) the substrate (1) with the coating (2) is subjected to a temperature treatment at at least 100 °C, whereafter the pane has a local minimum of reflectance (R_{L}) in the range from 310 nm to 360 nm and a local maximum of reflectance (R_{L}) in the range from 400 nm to 460 nm.

12. Use of a pane according to one of claims 1 through 10 in buildings, in electrical or electronic equipment, or in means of transportation for travel on land, in the air, or on water, in particular as a window pane, for example, as a building window pane or roof panel, side window, rear window, or windshield of a vehicle, or as a capacitive or resistive sensor for tactile applications, for example, as a touch screen or or touch panel.

## Revendications

1. Vitre ayant un revêtement électriquement conducteur, comprenant un substrat (1) et un revêtement électriquement conducteur (2) sur une surface exposée du substrat (1), lequel revêtement, partant du substrat (1), comprend au moins
- une couche de blocage (7) contre la diffusion des alcalis ayant un indice de réfraction d'au moins 1,9,
- une couche antiréfléchissante inférieure diélectrique (3) ayant un indice de réfraction de 1,3 à 1,8,
- une couche électriquement conductrice (4),
- une couche barrière diélectrique (5) pour réguler la diffusion de l'oxygène ayant un indice de réfraction d'au moins 1,9, et
- une couche antireflet supérieure diélectrique (6) ayant un indice de réfraction de 1,3 à 1,8, dans laquelle la couche antireflet supérieure (6) est la couche la plus haute du revêtement (2),
dans lequel la couche de réflexion inférieure (3) et/ou la couche de réflexion supérieure (6) contiennent de l'oxyde de silicium, de l'oxyde d'aluminium, du fluorure de magnésium ou du fluorure de calcium,
dans laquelle la couche de réflexion inférieure (3) a une épaisseur de 10 nm à 20 nm et dans lequel la couche de réflexion supérieure (6) a une épaisseur de 45 nm à 55 nm, dans lequel la vitre a un minimum local de réflectance (R_{L}) dans la gamme de 310 nm à 360 nm et un maximum local de réflectance (R_{L}) dans la gamme de 400 nm à 460 nm.

2. Vitre selon la revendication 1, dans laquelle la couche électriquement conductrice (4) contient un oxyde conducteur transparent (TCO), de préférence de l'oxyde d'indium et d'étain (ITO).

3. Vitre selon la revendication 1 ou 2, dans laquelle la couche électriquement conductrice (4) a une épaisseur de 50 nm à 150 nm, de préférence de 60 nm à 100 nm.

4. Vitre selon l'une des revendications 1 à 3, dans lequel l'oxyde de silicone contenu dans la couche antireflet inférieure (3) et/ou la couche antireflet supérieure (6) est un oxyde de silicium dopé à l'aluminium, au zirconium, au titane ou au bore.

5. Vitre selon l'une des revendications 1 à 4, dans laquelle la couche barrière (5) a un indice de réfraction de 1,9 à 2,5.

6. Vitre selon l'une des revendications 1 à 5, dans laquelle la couche barrière (5) contient un métal, un nitrure, ou un carbure, de préférence du nitrure de silicium ou du carbure de silicium, en particulier du nitrure de silicium.

7. Vitre selon l'une des revendications 1 à 6, dans laquelle la couche barrière (5) présente une épaisseur de 5 nm à 20 nm, de préférence de 7 nm à 12 nm.

8. Vitre selon l'une des revendications 1 à 7, dans laquelle la couche de blocage (7) présente un indice de réfraction de 1,9 à 2,5.

9. Vitre selon l'une des revendications 1 à 8, dans laquelle la couche de blocage (7) contient du nitrure de silicium, de préférence du nitrure de silicium dopé à l'aluminium, au zirconium, au titane ou au bore.

10. Vitre selon l'une des revendications 1 à 9, dans laquelle la couche de blocage (7) a une épaisseur de 10 nm à 50 nm, de préférence de 20 nm à 40 nm.

11. Procédé de fabrication d'un vitre comportant un revêtement électriquement conducteur selon l'une des revendications 1 à 10, dans lequel
(a) un revêtement électriquement conducteur (2) est appliqué sur une surface exposée d'un substrat (1), lequel revêtement, partant du substrat (1), comprend au moins
- une couche de blocage (7) contre la diffusion des alcalis ayant un indice de réfraction d'au moins 1,9,
- une couche antiréfléchissante inférieure diélectrique (3) ayant un indice de réfraction de 1,3 à 1,8,
- une couche électriquement conductrice (4),
- une couche barrière diélectrique (5) pour réguler la diffusion de l'oxygène ayant un indice de réfraction d'au moins 1,9, et
- une couche antireflet supérieure diélectrique (6) ayant un indice de réfraction de 1,3 à 1,8 ; et
(b) le substrat (1) avec le revêtement (2) est soumis à un traitement thermique à au moins 100 °C, après quoi la vitre a un minimum local de réflectance (R_{L}) dans la gamme de 310 nm à 360 nm et un maximum local de réflectance (R_{L}) dans la gamme de 400 nm à 460 nm.

12. Utilisation d'une vitre selon l'une des revendications 1 à 10 dans des bâtiments, dans des équipements électriques ou électroniques, ou dans des moyens de transport pour des déplacements sur terre, dans l'air ou sur l'eau, en particulier comme vitre de fenêtre, par exemple, comme vitre de fenêtre de bâtiment ou panneau de toit, fenêtre latérale, fenêtre arrière ou pare-brise d'un véhicule, ou comme capteur capacitif ou résistif pour des applications tactiles, par exemple, comme écran tactile ou panneau tactile.
